# EUROPÄISCHE PATENTANMELDUNG

(11) **EP 1 647 785 A2**
(43) Veröffentlichungstag der Anmeldung: **19.04.2006**
(21) Anmeldenummer: 05020743.0
(22) Anmeldetag: 23.09.2005
(51) Int. Cl.: F25D 23/02, A47F 3/04, B29C 47/06

(54) **Abdeckfolie mit dämmenden Eigenschaften für Kühlmöbel**

(30) Priorität: 12.10.2004 DE 102004049781
(71) Anmelder: Conatis GmbH, 63773 Goldbach (DE)
(72) Erfinder: Borgmeier, David, 63768 Johannesberg (DE)
(74) Vertreter: Pöhner, Wilfried Anton, Dr.

(57) **Zusammenfassung**

Kühlmöbel mit einer temporären Abdeckung (1), die eine Schicht (2) beinhaltet, die thermisch dämmend und diffusionsoffen ist, wobei die thermisch dämmende Schicht (2) auf der Kalt (6)- und/oder der Warmseite (7) bereichsweise Verdichtungen (3) aufweist, und zumindest in den nicht verdichteten Bereichen diffusionsoffen ist sowie Verfahren zu Herstellung der genannten Abdeckung (1).

## Beschreibung

Die Erfindung betrifft Kühlmöbel mit einer temporären Abdeckung, die eine Schicht beinhaltet, die thermisch dämmend und diffusionsoffen ist.

Die Erfindung betrifft außerdem ein Verfahren zur Herstellung einer Abdeckfolie für Kühlmöbel, die eine Schicht beinhaltet, die thermisch dämmend, und diffusionsoffen ist.

Aus dem Stand der Technik (DE 198 48 395 C 2) sind zur temporären Abdeckung von Kühlmöbeln perforierte Kunststofffolien bekannt. Die durch die Perforation strömende Luft gewährleistet die Trockenhaltung der Oberfläche der Abdeckung. Als weitere Maßnahme zur Kondenswasservermeidung ist die Abdeckung in zwei etwa gleichgroße Teile, ein Oberteil und ein Unterteil eingeteilt. Die Öffnungen im oberen Teil dienen dem Hereinholen von Wärme und die Öffnungen im unteren Teil dienen dem Herauslassen von Wärme. Durch die gezielte Hinterlüftung der Folie wird diese auf einer Temperatur gehalten, welche die unerwünschte Bildung von Kondenswasser auf der Folie verhindert. Die Öffnungen im oberen Bereich der Folie weisen im Vergleich zum unteren Bereich der Folie ein doppelt so großes Verhältnis von Öffnungsfläche zur Gesamtfläche der Folie auf.

Nachteiligerweise wird bei perforierten Folien nur die im Randbereich der Perforationsöffnung strömende Luft zum Wärmeaustausch genutzt, während die im Achsenbereich der Perforationsöffnung durchströmende Luft im wesentlichen nicht genutzt wird.

Die Aufgabe der Erfindung besteht vor diesem Hintergrund in der Schaffung einer Abdeckung für Kühlmöbel, die bei optimaler Wärmeisolierung zur Vermeidung von Kondenswasser auf der Oberfläche der Abdeckung in ihrem Inneren so strukturiert ist, dass die wärmedämmende Schicht für eine Kriechströmung durchlässig ist und sich so ein kleines Strömungsvolumen ergibt. Dabei soll die zum Wärmeaustausch zur Verfügung stehende Oberfläche der wärmedämmenden Schicht möglichst groß sein.

Die Lösung der Aufgabe besteht in einer Abdeckfolie, die dadurch gekennzeichnet ist, dass die thermisch dämmende Schicht auf der Kalt- und/oder der Warmseite bereichsweise Verdichtungen aufweist, und zumindest in den nicht verdichteten Bereichen diffusionsoffen ist.

Der Kerngedanke der Erfindung besteht in der Verwendung eines Vlieses, anstatt eines gewebeartigen Materials. Vorteilhafterweise ist die Herstellung vliesartiger Materialen preisgünstiger. Außerdem können derartige Materialen in einem Kalander, der mindestens eine heizbare Prägewalze aufweist, mit geringem Kostenaufwand hergestellt werden, wobei die Prägung zu einer partiellen Verdichtung und zur Entstehung einer dauerhaft strukturierten Oberfläche führt. Das Vlies bleibt in den nicht verdichteten Bereichen verbundenen Verdichtung luftdurchlässig, so dass zur Gewährleistung eines Kriechstroms innerhalb der Abdeckfolie keine zusätzliche Perforation erforderlich ist. Durch die partielle Verdichtung kann das Material außerdem stabilisiert und bei entsprechender Ausführung der Verdichtungen sogar kompartimentiert, wobei auch hier die Diffusionsoffenheit erhalten bleibt.

Die Anbringung der Verdichtungsstellen kann gemäß dem Kerngedanken des erfindungsgemäßen Verfahrens, durch entsprechende Gestaltung der zu einem Kalander gehörenden Walzen, auf kostengünstige Weise, im Rahmen der Herstellung der wärmedämmenden Schicht, erfolgen.

Es ist vorgesehen, dass die Verdichtungen der thermisch dämmenden Schicht punktförmig oder linienförmig sind. Natürlich ist auch eine Kombination der beiden Grundmuster, oder jede andere Prägeart. Die Linien bzw. streifenförmigen Verdichtungen können auch in der Art eines Zick-Zack-Musters aneinandergereiht sein. Die Abstände zwischen den Verdichtungen können regelmäßig oder unregelmäßig sein. Bei Herstellung der Schicht mit Hilfe einer zu einem Kalander gehörenden Prägewalze sind die Abstände zwischen den Verdichtungen regelmäßig.

Die Dauerhaftigkeit der Verdichtung wird das Verschmelzen der thermoplastischen Materialanteile erreicht. Alternativ oder ergänzende kann die Dauerhaftigkeit auch durch Zugabe eines Klebers während der Verdichtung erreicht werden. Aufgrund der Verdichtungen erhält die Schicht zwangsweise Vertiefungen und bei Aufwölbung der zwischen den Verdichtungen liegenden Bereiche auch Erhöhungen. Während die Diffusionsoffenheit der wärmedämmenden Schicht im Bereich der Verdichtungen eher herabgesetzt ist, ist die Diffusionsoffenheit in den zwischen den Verdichtungen liegenden "erhöhten" Bereichen unverändert. Der zur Vermeidung von Tauwasser erforderliche Wärmeaustausch im Inneren der Abdeckung kann in den diffusionsoffenen Bereichen optimal erfolgen. Dabei dient vorteilhafterweise die gesamte nicht verdichtete Fläche der thermisch dämmenden Schicht dem Wärmeaustausch.

Bei ausreichend großer Beabstandung der Verdichtungen ist davon auszugehen, dass die zwischen den Verdichtungen liegenden Erhöhungen in ihrer Ausdehnung jeweils etwa der Stärke der thermisch dämmenden Schicht entsprechen.

In einer Weiterbildung der Abdeckung ist vorgesehen, dass die thermisch dämmende Schicht sowohl auf der Kaltseite als auch auf der Warmseite Vertiefungen aufweist, wobei diese den Vertiefungen der Warmseite gegenüberliegen, das Gleiche gilt für die sich zwischen den Vertiefungen bildenden Erhöhungen. Natürlich ist auch denkbar, dass die durch die bereichsweise Verdichtung der dämmenden Schicht entstandenen Vertiefungen dem auf der anderen Seite der dämmenden Schicht befindlichen Vertiefungen versetzt gegenüber liegen.

In einer besonderen Ausführungsform ist vorgesehen, dass die Abdeckfolie in ein der Wickelrolle näher liegendes Oberteil und ein von der Wickelrolle weiter entferntes Unterteil eingeteilt ist. Oberteil und Unterteil können in ihrer Flächengröße gleich sein oder voneinander abweichen. Wesentlich ist, dass das Unterteil in der Summe eine größere Fläche von Verdichtungen aufweist, sodass die Diffusionsoffenheit des Unterteils im Vergleich zum Oberteil herabgesetzt ist. Diese Maßnahme dient der Kondenswasservermeidung und fördert einen definierten Luftaustausch zwischen dem Kühlmöbelinneren und der wärmeren Umgebung. Durch den Luftaustausch wird die Abdeckfolie hinterlüftet und die Feuchtigkeit im Inneren nach außen befördert. Der begrenzte Durchtritt von warmer Luft ins Innere der Abdeckung ist bei vertikaler Anordnung der abgewickelten Folie besonders im oberen Teil erwünscht, weil die in den oberen Teil eingedrungene Luft nach dem Abkühlen nach unten sinkt und diese Luft die Abdeckung unter Mitnahme von Feuchtigkeit wieder nach außen verlässt. Zur Förderung dieser Strömungsrichtung empfiehlt es sich, dass der obere Bereich in seiner Diffusionsoffenheit durch die Anbringung von Verdichtungen während der Herstellung der dämmenden Schicht weniger eingeschränkt wird als der untere Teil. Dabei hat es sich als günstig erwiesen, wenn die Verdichtung der Abdeckung in horizontaler Richtung möglichst homogen gestaltet ist. Die homogene Gestaltung der Verdichtung in horizontaler Richtung schließt jedoch nicht aus, dass die Verdichtungen in horizontaler Richtung voneinander beabstandet angelegt sind, wobei zwischen den Verdichtungen unverdichtete Bereiche liegen. Wesentlich ist, dass die unverdichteten Bereiche sowie die Verdichtungen in ihrer vertikalen Ausdehnung jeweils gleich sind, sodass eine gleichmäßige, d. h. homogene Durchlüftung der Abdeckung in dieser Richtung möglich ist.

Als Material für die dämmende Schicht sind nicht gewobene Materialien vorgesehen. Dies können beispielsweise vlies- oder filsartige Materialien sowie Schaumstoff sein. Als Vliese werden flexible, poröse Flächengebilde bezeichnet, die nicht durch die klassische Methode der Gewebebindung mit vorheriger Garnbildung, sondern durch Verschlingen oder Verwirren von Fasern entstehen. Um den bleibenden Zusammenhalt des Vlieses zu erreichen, kann dieses durch Nadeln und Pressdruck, sowie chemisch durch Besprühen mit Klebemitteln verfestigt werden. Bei Biokomponenten Fasern, thermoplastischen Fasern oder gemischten Vliesen mit Fasern verschiedener Schmelzpunkte kann eine Verfestigung bei Erhitzen durch Verschweißen der Fasern erreicht werden. Um Verkleben von Vliesfasern können flüssige Bindemittel wie beispielsweise Acrylat und - Polymere oder Polyvinylester - oder Polyurethan - Dispersionen eingesetzt werden. Bei den vliesartigen Materialien kommt insbesondere ein Vlies in Frage, dass sich auf Grund seiner Struktur als Filtervlies eignet.

In einer besonderen Ausführungsform ist vorgesehen, dass das die dämmende Schicht bildende Filtervlies aus Polypropylen und/oder Polyester besteht. Diese beiden Kunststoffe eignen sich besonders zur Herstellung von Filtervliesen mit Hilfe eines Kalanders. Zur Fixierung der Fasern nach der Verdichtung des Vlieses weist das Ausgangsmaterial zur Herstellung des Vlieses thermoplastische Anteile auf. Unter dem Einfluss der erhitzten Prägewalze werden zumindest die thermoplastischen Anteile der Fasern angeschmolzen, sodass diese im Bereich der Verdichtung miteinander verkleben.

Es liegt im Rahmen der Erfindung, dass das Vlies eine definierte Farbe hat, wegen der günstigen Reflektionseigenschaften kommt insbesondere die Silberfärbung des Vlieses in Frage. Dadurch wird die Außenwärme bereits auf der Wärmeseite reflektiert und vom Eindringen in die Abdeckung abgehalten. Die Färbung kann erreicht werden, indem bei der Herstellung des Vlieses dem Ausgangsmaterial metallisierte Kunststoff, insbesondere metallisierte Polyesterfäden zugemischt werden.

Die dämmende Schicht mit den durch die Bereichsweise Verdichtung in ihrer Diffusionsoffenheit veränderten Oberfläche kann sowohl alleine als auch im Zusammenhang mit einer Metallbeschichtung eingesetzt werden. Die Metallbeschichtung ist mit der thermisch dämmenden Schicht laminatartig, d.h. in der Art eines Schichtpressstoffes, verbunden oder verklebt. Da insbesondere auf der Innenseite des Kühlmöbels, d. h. auf der Kaltseite der dämmenden Schicht eine hohe Luftfeuchtigkeit herrscht, ist die Beschichtung der dämmenden Schicht auf ihrer Kaltseite mit einer dünnen Schicht aus Aluminium vorgesehen. Die Beschichtung der dämmenden Schicht ist insbesondere für Tiefkühltruhen geeignet. Bei Truhen ist charakteristisch, dass sich oberhalb der tieferen Bereiche der Truhe ein entstehendes Luftpolster ausbildet, dass wesentlich zur thermischen Isolierung beiträgt. Andererseits herrscht oberhalb der Truhe eine Temperatur von 20 bis 25° und eine mittlere Feuchte von 60 %. Der durch das Luftpolster definierte Temperatur Gradient ist groß, sodass im oberen Bereich, d. h. oberhalb des Luftpolsters unmittelbar unter der Abdeckfolie eine Temperatur von bis zu + 15° herrschen kann. Somit entsteht unmittelbar an der Folie, die Luftdicht ist, ein vergleichsweiser kleiner Temperaturgradient. Ungeachtet dessen, bildet sich auf der Oberseite der Folie aufgrund der Taupunktsüberschreitung im Wege der Kondensation Feuchtigkeit aus. Wenn nun, wie vorgesehen, oberhalb der luftdichten Metallfolie das Vlies angebracht ist, tritt keine Kondensation mehr auf. Das Vlies wirkt wie ein Luftpolster, dass zusätzlich isoliert, d.h. das Temperaturgefälle wirkt wie ein Luftpolster, dass zusätzlich isoliert, d.h. das Temperaturgefälle zwischen Außen- und Innenbereich der Folie wird verringert.

Zur außenseitigen Stabilisierung der wärmedämmenden Schicht sowie zum Schutz der Vliesschicht gegenüber mechanischen Verletzungen ist die Anbringung einer perforierten Aluminiumschicht oder einer zusätzlichen diffusionsoffenen Gewebeschicht denkbar. Die Perforation der auf der Warmseite vorgesehenen Aluminiumschicht erfolgt, wenn der Luftaustausch im Inneren der Abdeckung über die Warmseite erfolgen soll.

Natürlich liegt es im Rahmen der Erfindung, dass die Abdeckung, die auch aus mehreren zueinander parallel verlaufenden Teilabschnitten bestehen kann, endseitig an einer Wickelwelle befestigt ist und auf dieser aufwickelbar ist. Für den Betrieb der Wickelwelle ist bei manuellem Antrieb eine Federmechanik vorgesehen und bei maschinellem Antrieb ein Motor, insbesondere ein Elektromotor.

Die Erfindung betrifft auch ein Verfahren zur Herstellung einer ein oder mehrschichtigen Abdeckung für Kühlmöbel mit einer thermisch dämmenden Schicht, wobei zur Herstellung der thermisch dämmenden Schicht zwei einander gegenüberliegende, einen Kalander bildende, Walzen eingesetzt werden.

Die Aufgabe des Verfahrens besteht in der möglichst effizienten Herstellung der oben genannten Abdeckung.

Zur Lösung der Aufgabe wurde ein Verfahren entwickelt, das dadurch gekennzeichnet ist, dass
- mindestens eine der Walzen eine beheizte Prägewalze ist, die punkförmige oder linienförmige Erhöhungen aufweist, oder
- beide Walzen beheizte Prägewalzen sind, die punktförmige oder linienförmige Erhöhungen aufweisen und
- die thermisch dämmende Schicht aus einem nichtgewobenen Material während ihrer Herstellung durch die punkt- oder linienförmigen Erhöhungen der Prägewalzen bleibend verdichtet wird, wobei die Verdichtung des nicht gewobenen Materials
- durch Schmelzen der thermoplastischen Anteil und/oder
- durch Zugabe eines Klebers erreicht wird.

Der Kerngedanke des Verfahrens besteht darin, dass die Verdichtungen zur Strukturierung und Beeinflussung der Diffusionsoffenheit der dämmenden Schicht mit Hilfe jenen Kalanderwalzen erreicht wird, die auch zur Herstellung der dämmenden Schicht dienen. Durch die Anbringung von Prägestempel unterschiedlicher Form (Punkt- und/oder linienförmig) auf den zum Kalander gehörenden Walzen wird die Anbringung der Vertiefungen noch während der Fertigung der dämmenden Schicht erreicht. Der Wegfall eines zusätzlichen Arbeitsschritts, der wie aus dem Stand der Technik bekannt die Perforation einer Folie beinhaltet, stellt einen wichtigen Kostenvorteil dar. Die Dauerhaftigkeit der Verdichtung wird durch das Verschmelzen der thermoplastischen Gewebeanteile erreicht, wobei alternativ oder ergänzend auch Klebstoff eingesetzt werden kann. Es ist vorgesehen, dass der Klebstoff über eine in der Walze liegende Leitung oder durch eine getrennte extern verlaufende Leitung zugeführt wird.

Es liegt im Rahmen des Verfahrens, dass die thermisch dämmende Schicht unmittelbar nach dem Verlassen der an ihrer Herstellung beteiligten Kalanderwalzen auf ihrer Kaltseite mit einer metallischen Folie, insbesondere einer Aluminiumfolie beschichtet werden kann. Daneben besteht die Möglichkeit zur Anbringung einer perforierten Aluminiumschicht oder einen zusätzlichen diffusionsoffenen Gewebeschicht auf der Warmseite der thermisch isolierten Schicht. Die zusätzliche Schicht auf der Warmseite soll das vliesartige Material der dämmenden Schicht vor mechanischer Verletzung schützen.

Im folgenden sollen weitere Einzelheiten und Merkmale der Erfindung anhand von Beispielen näher erläutert werden. Die abgebildeten Beispiele sollen die Erfindung jedoch nicht einschränken, sondern nur erläutern. Es zeigen in schematischer Darstellung:
- **Figur 1**: Kühlmöbelabdeckung mit Wickelrolle
- **Figur 2**: Schichtaufbau der Kühlmöbelabdeckung
- **Figur 3**: Dämmende Vliesschicht

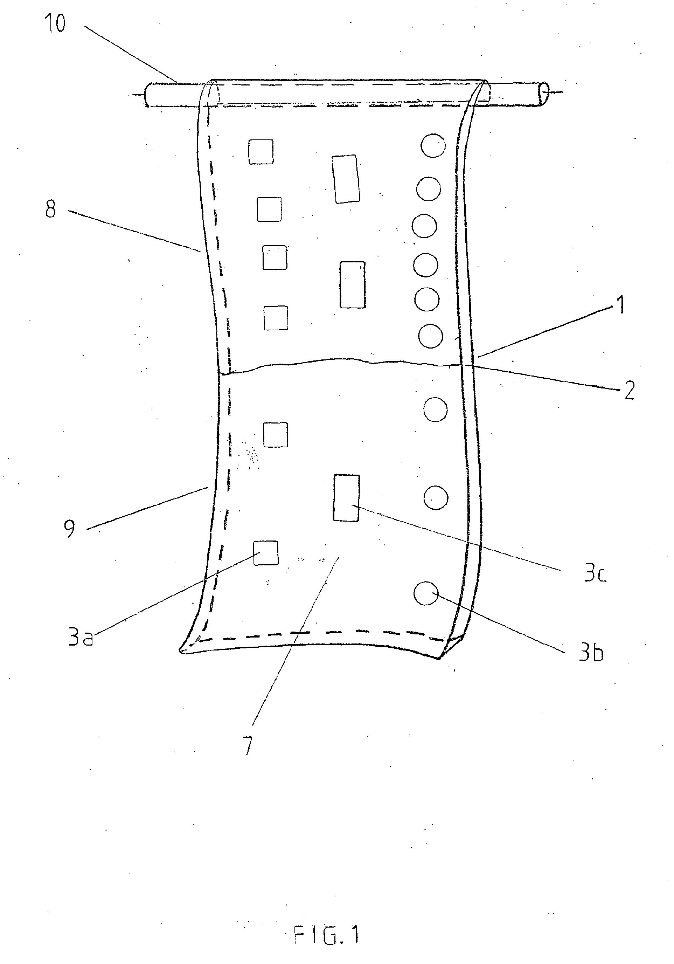

Figur 1 zeigt eine Abdeckung 1 für Kühlmöbel, die an einer Wickelrolle 10 befestigt ist im abgewickelten Zustand. Der in vertikaler Richtung gesehen unten liegende Teil 9 der Abdeckung weist auf der zum Betrachter gerichteten Warmseite 7 der thermisch dämmenden Schicht 2 eine geringere Zahl von Verdichtungen 3a, 3b, 3c auf. Der obere Teil 8 der thermisch dämmenden Schicht 2 weist im gezeigten Beispiel etwa die doppelte Zahl von Verdichtungen 3a - 3c auf. Die Abdeckung 1 ist im gezeigten Beispiel nicht mehrschichtig und besteht lediglich aus der thermisch dämmenden Schicht 2, die aus einem vliesartigen Material aufgebaut ist.

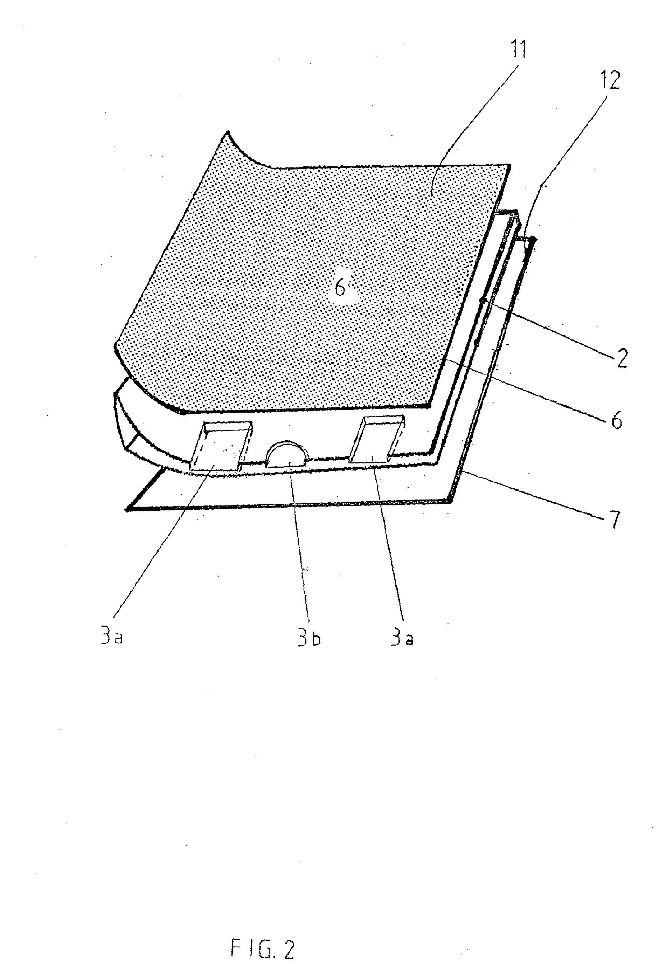

Figur 2 zeigt schematisch den mehrschichtigen Aufbau einer Abdeckung 1 für Kühlmöbel. Die in der Mitte liegende thermisch dämmende Schicht 2 zeigt, voneinander beabstandet Vertiefungen 3a und 3b, die während der Herstellung der thermisch dämmenden Schicht 2 mit Hilfe einer Prägewalze gefertigt wurden. Die zur Prägung der Vertiefungen 3a, 3b auf der Prägewalze vorgesehenen Prägestempel weisen eine höhere Temperatur als die übrigen Bereiche auf. Dadurch kommt es zur Verschmelzung der im Vliesgewebe liegenden thermoplastischen Fasern. Durch die Verdichtungen 3a, 3b wird die Diffusionsoffenheit der thermisch dämmenden Schicht 2 im Bereich der Verdichtungen 3a, 3b herabgesetzt. Das Ausmaß, mit dem die Diffusionsoffenheit der Vliesschicht 2 abnimmt, hängt dabei von der Prägung, während der Vliesherstellung d. h. von der Festigkeit der Verdichtungen 3a, 3b ab und ist variierbar. Die Beeinflussung der Diffusionsoffenheit der thermisch dämmenden Schicht 2, erlaubt die intelligente Durchlüftung des Inneren der Isolierschicht 2 und damit die Vermeidung von Kondensationswasser auf der Kaltseite 6 der Abdeckung 1. Im gezeigten Beispiel ist die aus einem vliesartigem Material bestehende thermisch dämmende Schicht 2 auf der Kaltseite 6 mit einer Aluminiumfolie 11 beaufschlagt. Auf der Warmseite 7 ist die thermisch dämmende Schicht 2 dagegen mit einem zusätzlichen Gewebe 12 versehen. Das zusätzliche Gewebe 12 kann auch aus einer perforierten Aluminiumfolie bestehen. Die Perforation der Aluminiumbeschichtung auf der Warmseite 7 ist zur Gewährleistung des Luftaustauschs in das Innere der Abdeckung 1 hinein, d. h. in das Innere der thermisch dämmenden Schicht 2 hinein, wichtig. Das zusätzliche Gewebe 12, bzw. die perforierte Aluminiumschicht dient dem mechanischen Schutz der vliesartigen thermisch dämmenden Schicht 2.

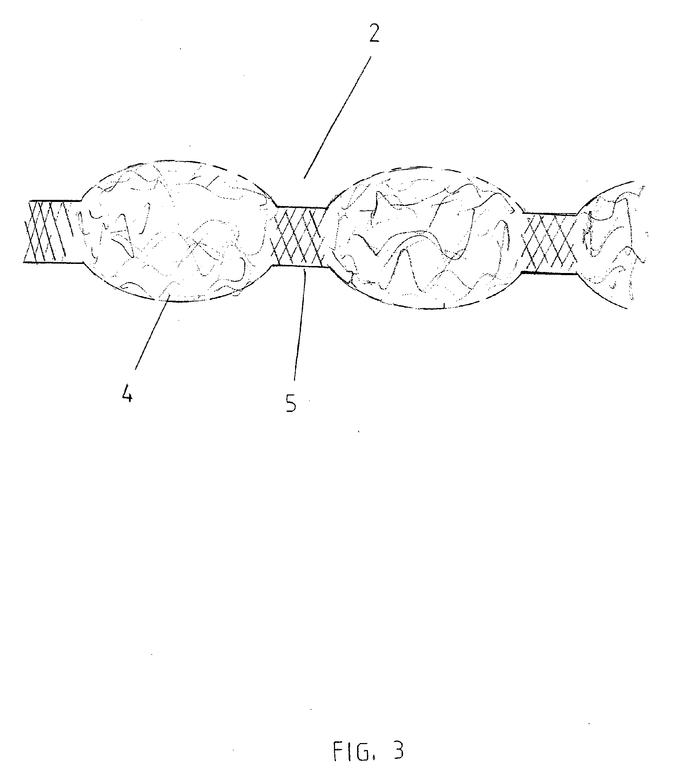

Figur 3 zeigt einen schematischen Querschnitt durch die dämmende Schicht 2. Als Vertiefungen 5 ergeben sich die durch Prägung mittels der Kalanderwalzen entstandenen Bereiche 5. Durch die Schraffur mit geraden Strichen ist schematisch dargestellt, dass die dämmende Schicht 2 in den verdichteten Bereichen 5 in ihrer Diffusionsoffenheit eingeschränkt ist. In den erhöhten Bereichen 4, die während der Herstellung des Vliesstoffes nicht zusätzlich verdichtet wurden, ist die Diffusionsoffenheit unverändert. Die Fasern des Vliesstoffes sind in den nicht verdichteten Bereichen, ebenfalls schematisch durch gekräuselte Linien, in ihrer unverdichteten Form, d. h. diffusionsoffen, dargestellt.

### Bezugszeichenliste

- 1.: Abdeckung für Kühlmöbel
- 2.: Thermisch dämmende Schicht
- 3a ― 3c.: Punkt- und linienförmige Verdichtung
- 4.: Erhöhung
- 5.: Vertiefung
- 6.: Kaltseite
- 7.: Warmseite
- 8.: Oberteil
- 9.: Unterteil
- 10.: Wickelwelle
- 11.: Alufolie
- 12: Gewebeschicht oder perforierte Aluschicht

## Patentansprüche

1. Kühlmöbel mit einer temporären Abdeckung (1), die eine Schicht (2) beinhaltet, die
- thermisch dämmend und
- diffusionsoffen ist,
**dadurch gekennzeichnet, dass**
- die thermisch dämmende Schicht (2)
- auf der Kalt- (6) und/oder der Warmseite (7) bereichsweise Verdichtungen (3) aufweist, und
- zumindest in den nicht verdichteten Bereichen (4) diffusionsoffen ist.

2. Kühlmöbel nach Anspruch 1, **dadurch gekennzeichnet, dass** die Verdichtung (3) der thermisch dämmende Schicht (2)
- punktförmig und/oder
- linienförmig sind, und
in regelmäßigen oder unregelmäßigen Abständen zueinander vorgesehen sind.

3. Kühlmöbel nach Anspruch 1 und 2, **dadurch gekennzeichnet, dass** die thermisch dämmende Schicht (2) infolge der bereichsweisen Verdichtung
- durch Verschmelzen eines thermoplastischen Faseranteils oder
- durch Einsatz eines Klebers
bleibende Erhöhungen (4) und Vertiefungen (5) aufweist.

4. Kühlmöbel nach Anspruch 3, **dadurch gekennzeichnet, dass** die Erhöhung (4) der Stärke der thermisch dämmenden Schicht (2) entspricht.

5. Kühlmöbel nach einem der Ansprüche 1, 2, 3 oder 4, **dadurch gekennzeichnet, dass** durch die bereichsweise Verdichtung (3) der dämmenden Schicht (2) entstandenen Erhöhungen (4) oder Vertiefungen (5) der Kaltseite (6) den Erhöhungen (4) oder Vertiefungen (5) der Warmseite (7) jeweils gegenüberliegen.

6. Kühlmöbel nach Ansprüche 1, 2, 3 oder 4, **dadurch gekennzeichnet, dass**, die durch bereichsweise Verdichtung (3) der dämmenden Schicht (2) entstandenen Vertiefungen (5) der Kaltseite (6) oder Warmseite (7) jeweils den Erhöhungen der Warmseite (7) oder Kaltseite (6) einander versetzt gegenüberliegen.

7. Kühlmöbel nach einem der vorhergehenden Ansprüche, **dadurch gekennzeichnet, dass** die Abdeckfolie in ein Oberteil (8) und ein Unterteil (9) eingeteilt ist und das Unterteil (9) in der Summe eine größere Fläche von Verdichtungen (3) aufweist.

8. Kühlmöbel nach Anspruch 7, **dadurch gekennzeichnet, dass** die Fläche des Oberteils (8) und des Unterteils (9) gleich groß sind.

9. Kühlmöbel nach einem der vorhergehenden Ansprüche, **dadurch gekennzeichnet, dass** das Material der dämmenden Schicht (2) aus einem nichtgewobenen Material besteht.

10. Kühlmöbel nach einem der vorhergehenden Ansprüche, **dadurch gekennzeichnet, dass** das Material der dämmenden Schicht (2) ein Vlies, ein Filzgelege oder ein Schaumstoff ist.

11. Kühlmöbel nach Anspruch 10, **dadurch gekennzeichnet, dass** das nicht gewobene Material der dämmenden Schicht (2) ein Filtervlies ist.

12. Kühlmöbel nach einem der vorhergehenden Ansprüche, **dadurch gekennzeichnet, dass** die dämmende Schicht (2) ein Filtervlies aus Polypropylen und/oder Polyestern ist.

13. Kühlmöbel nach Anspruch 12, **dadurch gekennzeichnet, dass** das aus Polypropylen und/oder aus Polyester bestehende Filtervlies thermoplastische Anteile aufweist.

14. Kühlmöbel nach einem der vorhergehenden Ansprüche, **dadurch gekennzeichnet, dass** das Vlies eine definierte Farbe hat.

15. Kühlmöbel nach einem der vorhergehenden Ansprüche, **dadurch gekennzeichnet, dass** das Vlies silberfarben ist.

16. Kühlmöbel nach einem der vorhergehenden Ansprüche, **dadurch gekennzeichnet, dass** das Vlies metallisierte Kunststofffasern enthält.

17. Kühlmöbel nach einem der vorhergehenden Ansprüche, **dadurch gekennzeichnet, dass** die dämmende Schicht (2) mit einer Metallbeschichtung versehen ist.

18. Kühlmöbel nach Anspruch 17, **dadurch gekennzeichnet, dass** die dämmende Schicht (2) auf der Kaltseite (6) mit einer Beschichtung aus Aluminium versehen ist.

19. Kühlmöbel nach einem der vorhergehenden Ansprüche, **dadurch gekennzeichnet, dass** die dämmende Schicht (2) auf
- der Kaltseite (6) eine Alubeschichtung, und auf
- der Warmseite (7) zusätzlich
- eine perforierte Aluminiumschicht, oder
- eine diffusionsoffene Gewebeschicht
aufweist.

20. Kühlmöbel nach einem der vorhergehenden Ansprüche, **dadurch gekennzeichnet, dass** die Abdeckung endseitig an einer Wickelwelle (10) befestigt ist und auf dieser aufwickelbar ist.

21. Kühlmöbel nach einem der vorhergehenden Ansprüche, **dadurch gekennzeichnet, dass** die Wickelwelle (10) manuell oder motorisch bewegbar ist.

22. Verfahren zur Herstellung einer ein- oder mehrschichtigen Abdeckung (1) für Kühlmöbel mit einer thermisch dämmenden Schicht (2) gemäß einem der vorhergehenden Ansprüche, wobei
- zur Herstellung der thermisch dämmenden Schicht (2) zwei einander gegenüberliegende, einen Kalander bildende, Walzen eingesetzt werden,
**dadurch gekennzeichnet, dass**
- mindestens eine der Walzen eine beheizte Prägewalze ist, die punkförmige oder linienförmige Erhöhungen aufweist, oder
- beide Walzen beheizte Prägewalzen sind, die punktförmige oder linienförmige Erhöhungen aufweisen und
- die thermisch dämmende Schicht (2) aus einem nichtgewobenen Material während ihrer Herstellung durch die punkt- oder linienförmigen Erhöhungen der Prägewalzen bleibend verdichtet wird, wobei die Verdichtung des nicht gewobenen Materials
- durch Schmelzen der thermoplastischen Anteil und/oder
- durch Zugabe eines Klebers erreicht wird.

23. Verfahren zur Herstellung einer ein- oder mehrschichtigen Abdeckung (1) für Kühlmöbel mit einer thermisch dämmenden Schicht (2) nach Anspruch 22 , **dadurch gekennzeichnet, dass** die punkt- oder linienförmigen Erhöhungen der beiden Prägewalzen einander versetzt, oder deckungsgleich gegenüberliegen.

24. Verfahren zur Herstellung einer ein- oder mehrschichtigen Abdeckung (1) für Kühlmöbel mit einer thermisch dämmenden Schicht (2) nach einem der Ansprüche 22 und 23, **dadurch gekennzeichnet, dass** die thermisch dämmende Schicht (2) nach Durchlaufen der einen Kalander bildenden Walzen auf ihrer Kaltseite (6) mit einer metallischen Folie beschichtet wird.

25. Verfahren zur Herstellung einer ein- oder mehrschichtigen Abdeckung (1) für Kühlmöbel mit einer thermisch dämmenden Schicht (2) nach einem der Ansprüche 22, 23 und 24, **dadurch gekennzeichnet, dass** die thermisch dämmende Schicht (2) nach Durchlaufen der einen Kalander bildenden Walzen
- auf der Kaltseite (6) durch eine metallische Folie beschichtet wird, und
- auf der Warmseite (7)
- eine perforierte Aluminiumschicht (11), oder
- eine zusätzliche diffusionsoffene Gewebeschicht (11) beschichtet wird.
